# EUROPÄISCHE PATENTANMELDUNG

(11) **EP 0 541 934 A1**
(43) Veröffentlichungstag der Anmeldung: **19.05.1993**
(21) Anmeldenummer: 92115997.6
(22) Anmeldetag: 18.09.1992
(51) Int. Cl.: F16L 19/04, F16L 33/22

(54) **Schlauch-Verschraubung**

(30) Priorität: 12.11.1991 DE 9114042 U
(71) Anmelder: Herion-Werke KG, D-70736 Fellbach (DE)
(72) Erfinder: Ebert, Jürgen, W-7052 Schwaikheim (DE)
(74) Vertreter: Leyh, Hans, Dr.-Ing.

(57) **Zusammenfassung**

Die Erfindung betrifft eine Schlauch-Verschraubung insbesondere für dickwandige, weiche Schläuche, wie sie zum Beispiel in der Medizintechnik aus Silikon eingesetzt werden. In das Schlauchende 20 ist eine Schlauchbüchse 22 mit Doppelkonus eingesetzt, beziehungsweise das Schlauchende 20 ist über die Schlauchbüchse 22 gezogen. Mittels einer Überwurfmutter 14 wird das Schlauchende mit der Schlauchbüchse gegen den Innenkonus 16 eines Verschraubungskörpers 12 angepreßt. Der Außendurchmesser der Schlauchbüchse 22 ist größer als oder annähernd gleich groß wie der Innendurchmesser der Überwurfmutter 14, wodurch ein Herausziehen des Schlauches aus der Verschraubung bei Zugbelastung verhindert wird.

## Beschreibung

Die Erfindung betrifft eine Schlauch-Verschraubung insbesondere für dickwandige, weiche Schläuche, mit einem rohrförmigen Verschraubungskörper, in den ein Schlauchende einführbar und gegen dieses mittels einer Überwurfmutter andrückbar ist.

Es sind Verschraubungen bekannt für Kunststoffrohre, bei denen als Dichtelement O-Ringe verwendet werden und das Rohr durch eine Spannzange gehalten wird. Für Schläuche sind Klemmverschraubungen bekannt, bei denen der Schlauch auf einen Rohrstutzen geschoben wird und von außen mit einer Überwurfmutter festgeklemmt wird.

Der Erfindung liegt demgegenüber die Aufgabe zugrunde, eine Schlauch-Verschraubung der Eingangs genannten Art so weiterzubilden, daß der Schlauch auch bei axialen auf ihn ausgeübten Kräften sicher in der Verschraubung gehalten wird.

Nach der Erfindung wird dies dadurch erreicht, daß in das Schlauchende eine Schlauchbüchse eingesetzt ist, die bündig mit dem Schlauch abschließt.
Vorzugsweise ist die Schlauchbüchse beidseitig konisch ausgebildet.
Der Verschraubungskörper hat anschlußseitig einen Innenkonus und der diesem zugewandte Außenkonus der Schlauchbüchse ist zweckmäßigerweise dem Innenkonus des Verschraubungskörpers angepaßt.

Vorzugsweise ist ferner der Winkel des Außenkonus der Schlauchbüchse auf der Schlauchseite größer als der Winkel des Außenkonus der Schlauchbüchse auf der Seite des Verschraubungskörpers.
Schließlich ist vorteilhafterweise der Außendurchmesser der Schlauchbüchse größer als oder annähernd gleich groß wie der Innendurchmesser der Überwurfmutter, wodurch verhindert wird, daß sich der Schlauch bei Zugbelastung verringt und aus der Verschraubung herausgerissen werden kann. Er wird vielmehr durch den Außenkonus der Schlauchbuchse an die Innenwand der Überwurfmutter angepreßt.

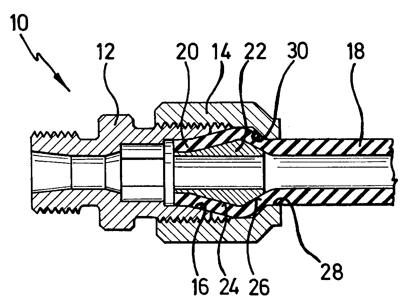

Eine beispielsweise Ausführungsform der Erfindung wird nachfolgend anhand der einzigen Figur der Zeichnung erläutert, die im Schnitt eine erfindungsgemäße Schlauch-Verschraubung zeigt.

Die Schlauch-Verschraubung 10 nach der Zeichnung besteht aus einem Verschraubungskörper 12 (zum Beispiel einem Rohrverschraubungskörper nach DIN 2353), der schlauchseitig ein Außengewinde hat, auf das eine mit entsprechendem Innengewinde versehene Überwurfmutter 14 geschraubt ist.
Der Verschraubungskörper 10 ist schlauchseitig ferner mit einem Innenkonus 16 versehen (zum Beispiel mit einem Konus von 24°), und ein Schlauch 18 ist mit einem Ende 20 in den Innenkonus 16 des Verschraubungskörpers 12 eingeschoben.

In das Schlauchende 20 ist nun, wie die Figur zeigt, eine Schlauchbüchse 22 eingesetzt, die auf der Seite des Verschraubungskörpers 12 bündig mit dem Schlauchende 20 abschließt.
Die Schlauchbüchse 20 ist in Form eines Doppelkonus ausgebildet und sie hat einen Außenkonus 24 auf der dem Verschraubungskörper 12 zugewandten Seite sowie einen Außenkonus 26 auf der dem Schlauch 18 zugewandten Seite.

Der Konuswinkel des Außenkonus 24 ist zweckmäßiger Weise dem Konuswinkel des Innenkonus 16 des Verschraubungskörpers 12 angepaßt, das heißt die beiden Konen 16 und 24 haben vorzugsweise denselben Konuswinkel. Der dem Schlauch 18 zugewandte Außenkonus 26 der Schlauchbüchse 22 hat vorzugsweise einen etwas größeren Konuswinkel zum Beispiel im Bereich von 25 bis 40°, wobei die genannten Winkel selbstverständlich in keinster Weise auf die angegebenen Zahlenwerte beschränkt sind.

Der Außendurchmesser der Schlauchbüchse 22, das heißt ihr größter Außendurchmesser an der Verbindungsstelle der beiden Konen 24 und 26, ist größer als oder annähernd gleich groß wie der engster Innendurchmesser 28 der Überwurfmutter 14. Wenn daher auf den Schlauch 18 eine Zugbelastung ausgeführt wird, wird das Schlauchende 20 durch den Außenkonus 26 der Schlauchbüchse 22 gegen die Innenfläche 30 der Überwurfmutter 14 angepreßt, und dadurch ein Herausziehen des Schlauches 18 aus der Verschraubung 10 verhindert.
Der Innendurchmesser der rohrförmigen Schlauchbüchse 22 entspricht zweckmäßigerweise wenigstens dem Innendurchmesser des Schlauches 18. Entsprechendes gilt für den Verschraubungskörper 12.

Beim Zusammenbau der Schlauch-Verschraubung wird zunächst die Überwurfmutter 14 über das Schlauchende geschoben. Danach wird die Schlauchbüchse so in das Ende 20 des Schlauches 18 eingesetzt, daß ihr Außenkonus 24 zum Schlauchende hin gerichtet ist. Nun wird das Schlauchende 20 mit der eingesetzten Schlauchbüchse 22 in den Verschraubungskörper 12 eingeschoben und die Überwurfmutter auf den Verschraubungskörper 12 geschraubt, wodurch das Schlauchende 20 gegen den Innenkonus 16 des Verschraubungskörpers 12 angedrückt wird.
Bei der erfindungsgemäßen Schlauch-Verschraubung können alle nach DIN 2353 ausgeführten Rohrverschraubungskörper verwendet werden.

Vorteilhaft ist ferner, daß der Schlauch in beide axiale Richtungen verklemmt wird. Aufgrund der Geometrie der Schlauchbüchse mit Doppelkonus und einem Außendurchmesser, der größer ist als der Innendurchmesser der Überwurfmutter wird verhindert, daß der Schlauch bei Zugbelastung aus dem Verschraubungskörper herausgezogen werden kann.

## Patentansprüche

1. Schlauch-Verschraubung insbesondere für dickwandige, weiche Schläuche, mit einem rohrförmigen Verschraubungskörper, in den das Schlauchende einführbar und gegen den es mittels einer Überwurfmutter anpreßbar ist, **dadurch gekennzeichnet**, daß in das Schlauchende (20) eine Schlauchbüchse (22) eingesetzt ist, die bündig mit dem Schlauch (18) abschließt.

2. Verschraubung nach Anspruch 1, dadurch gekennzeichnet, daß die Schlauchbüchse (22) beidseitig konisch ausgebildet ist und mit einem Außenkonus (24) und einem Außenkonus (26) versehen ist.

3. Verschraubung nach Anspruch 1 oder 2, wobei der Verschraubungskörper anschlußseitig einen Innenkonus hat, dadurch gekennzeichnet, daß der verbrauchskörper-seitige Außenkonus (24) der Schlauchbüchse (22) dem Innenkonus (16) des Verschraubungskörpers (12) angepaßt ist.

4. Verschraubung nach einem der Ansprüche 1 bis 3, dadurch gekennzeichnet, daß der Konuswinkel des Außenkonus (26) der Schlauchbüchse (22) auf der Schlauchseite größer ist als der Konuswinkel des Außenkonus (24) der Schlauchbüchse (22) auf der Seite des Verschraubungskörpers (12).

5. Verschraubung nach einem der vorhergehenden Ansprüche, dadurch gekennzeichnet, daß der Außendurchmesser der Schlauchbüchse (22) größer als oder annähernd gleich groß ist wie der Innendurchmesser (28) der Überwurfmutter (14).
